# EUROPEAN PATENT APPLICATION

(11) **EP 2 840 436 A2**
(43) Date of publication of application: **25.02.2015**
(21) Application number: 14181094.5
(22) Date of filing: 14.08.2014
(51) Int. Cl.: G02F 1/1333

(54) **Display device and support member thereof**

(30) Priority: 20.08.2013 JP 2013170810
(71) Applicant: Funai Electric Co., Ltd., Daito city Osaka 574-0013 (JP)
(72) Inventor: Sasaoka, Hiromasa, Osaka, Osaka 574-0013 (JP); Horiuchi, Hirofumi, Osaka, Osaka 574-0013 (JP)
(74) Representative: Osha Liang SARL

(57) **Abstract**

A display device (100; 1 00a; 100b) comprises a display panel (20) configured to display an image on a screen on a front surface of the display panel (20), a backlight unit (40) that covers a back surface side of the display panel (20) and irradiates light toward the back surface side of the display panel (20), a back surface member (50) disposed on a back surface side of the backlight unit (40), a frame-shaped member (10) that presses a peripheral edge portion of the display panel (20) from a front surface side of the display panel (20) and is fixed to the back surface member (50), and a support member (30) provided between the display panel (20) and the backlight unit (40). The support member (30) presses at least a portion of a peripheral edge portion of the backlight unit (40) from the front surface side.

## Description

### [Technical Field]

The present invention relates to a display device and a support member intended to support a display panel and a backlight unit of a display device.

### [Background Technology]

Conventional liquid crystal display devices are provided with a bezel made of metal that holds a peripheral edge portion of a liquid crystal panel from a front surface side for ensuring a strength of the liquid crystal panel. With regard to such liquid crystal display devices, a display device is disclosed that ensures the strength of the liquid crystal panel while omitting the bezel made of metal in order to reduce a thickness and narrow a frame (see Patent Document 1).

### [Related Art Documents]

### [Patent Documents]

[Patent Document 1] Japanese Unexamined Patent Application Publication No. 2009-134269

In the display device according to Patent Document 1, in the absence of a bezel made of metal, the strength of the liquid crystal panel is ensured by reinforcing a cabinet made of resin that presses the peripheral edge portion of the liquid crystal panel from the front surface side. However, in the display device according to Patent Document 1, a sufficient strength is not ensured because a member made of metal is omitted, and it is difficult to reduce the thickness and narrow the frame because, in order to ensure sufficient strength in the display device, a thickness of a reinforcing portion has to be increased.

### [Summary of Invention]

One or more embodiments of the present invention provide a display device that can ensure a strength of a display panel while reducing a thickness and narrowing a frame, and a support structure of an optical member of the display device.

According to one or more embodiments of the invention, a display device may comprise: a display panel configured to display an image on a screen on a front surface of the display panel; a backlight unit that covers a back surface side of the display panel and is configured to irradiate light toward the back surface side of the display panel; and a support member provided between the display panel and the backlight unit, wherein the support member may press at least a portion of a peripheral edge portion of the backlight unit from the front surface side, and the display device may further comprise at least one of a first protective member that is disposed on the support member in a position contacting the display panel and that protects a top surface of the display panel and a second protective member that is disposed on the support member in a position contacting the backlight unit and that protects a top surface of the backlight unit.

The support member provided between the display panel and the backlight unit results in at least one portion of the peripheral edge portion of the display panel and the backlight unit having a predetermined strength.

According to one or more embodiments of the invention, the display device may further comprise a back surface member disposed on a back surface side of the backlight unit and a frame-shaped member that presses a peripheral edge portion of the display panel from a front surface side of the display panel and is fixed to the back surface member.

According to one or more embodiments of the invention, the support member provided between the display panel and the backlight unit may comprise a material having a predetermined rigidity, for example a rigidity substantially equal to the rigidity of a metal material. In this manner, the peripheral edge portions of the display panel and the backlight unit can be strengthened without requiring a bezel made of metal, that presses a conventional display panel from the front surface side.

According to one or more embodiments of the invention, at least one from among the first protective member and the second protective member may be disposed in positions, on the support member, contacting the display panel and the backlight unit. Because of this, the support member can be prevented from scratching the display panel and/or the backlight unit.

According to one or more embodiments of the invention, a portion, for example an end portion of the support member toward a center of the screen may be subjected to an antireflection treatment that prevents light irradiated from the backlight unit from being reflected by the support member.

According to one or more embodiments of the invention, because the antireflection treatment that prevents the light irradiated from the backlight unit from being reflected by the support member may be applied to the end portion of the support member toward the center of the screen, the light irradiated from the backlight unit can be prevented from being reflected by a back surface side of the support member. By this, for example, the light can be prevented from being irradiated toward the back surface side of the display panel from an unintended direction and a quality of an image displayed on the display panel can be improved.

According to one or more embodiments of the invention, the display device may comprise the second protective member. According to one or more embodiments of the invention, when the display device comprises the second protective member, the antireflective treatment may be applied to the end portion of the support member toward the center of the screen by disposing the second protective member on the support member.

According to one or more embodiments of the invention, because the antireflection treatment may be applied to the end portion of the support member toward the center of the screen by disposing the second protective member on the support member, the support member can be prevented from scratching the backlight unit and the light irradiated from the backlight unit can be prevented from being reflected by the back surface side of the support member. In this manner, for example, because the second protective member combines two functions of scratch prevention and reflection prevention, compared to a configuration that realizes each function with individual components, the number of components can be reduced. Because of this, for example, the structure of the display device can be simplified and the production cost of the display device can be reduced.

According to one or more embodiments of the invention, the support member may comprise: a first support portion that presses the peripheral edge portion of the backlight unit from the front surface side; and a second support portion formed continuously along an outer peripheral edge of the first support portion toward a back surface side of the first support portion and disposed on a side of the backlight unit.

According to one or more embodiments of the invention, because the second support portion of the support member may be formed on a lateral side of the backlight unit in addition to the first support portion that presses a front surface side of the peripheral edge portion of the backlight unit, a strength of the backlight unit can be further ensured. According to one or more embodiments of the invention, the support member may comprise the first support portion and the second support portion and may be for example configured with an L-shaped cross section. In this manner, a strength thereof can be further increased compared to when, for example, the support member comprises the first support portion alone.

According to one or more embodiments of the invention, the support member may comprise an electrically conductive material. According to one or more embodiments of the invention, when the support member comprises an electrically conductive material, the support member may be provided with an insulation treatment that electrically insulates the support member from any electrical component disposed on a side of the support member.

According to one or more embodiments of the invention, because the support member may comprise a material having electrical conductivity and an insulating treatment may be applied between the support member and any electrical component disposed on a side of the support member, an electrical component can be prevented from being shorted by the support member when, for example, the electrical component contacts the support member due to an impact from the outside. By this, for example, a failure of electrical components due to shorting via the support member can be prevented.

According to one or more embodiments of the invention, the support member may be thermally connected to one or more electrical components disposed on a side of the support member.

According to one or more embodiments of the invention, because the support member and any electrical component disposed on a side of the support member may be thermally connected, heat generated by the electrical component can be dissipated by the support member.

According to one or more embodiments of the invention, the backlight unit may comprise: a light source; a light-guide plate configured to guide light from the light source to an inner portion of an enclosure of the display device and irradiate the light guided to the inner portion toward the back surface side of the display panel; and an optical sheet disposed on a front surface side of the light-guide plate. According to one or more embodiments of the invention, the light-guide plate and the optical sheet may each be disposed in a stacked configuration in which the entirety of an outer peripheral edge of the light-guide plate and the optical sheet overlaps at least one of the frame-shaped member and the support member when viewed from the front. According to one or more embodiments of the invention, the display device may further comprise: a position regulating portion that regulates movement of the light-guide plate, the optical sheet, the support member, and at least one of the frame-shaped member and the back surface member in a direction in which the light-guide plate, the optical sheet, the support member, and the at least one of the frame-shaped member and the back surface member intersect in a longitudinal direction.

According to one or more embodiments of the invention, when the display device comprises a position regulating portion, relative positions of the light-guide plate and the optical sheet, which configure the backlight unit, and the support member, respectively, and at least one from among the frame-shaped member and the back surface member can be suppressed from shifting in the directions in which they intersect in the longitudinal direction. Because of this, for example, the stacked configuration can be easily maintained.

According to one or more embodiments of the invention, the position regulating portion may comprise: a protruding portion formed on the back surface member or the frame-shaped member; a first penetration portion formed in an end portion of the light-guide plate and penetrated, in the stacked configuration, by the protruding portion at the end portion of the light-guide plate; a second penetration portion formed in the optical sheet and penetrated, in the stacked configuration, by the protruding portion along with the first penetration portion; and a third penetration portion formed in the support member and penetrated, in the stacked configuration, by the protruding portion along with the first penetration portion and the second penetration portion.

According to one or more embodiments of the invention, the light-guide plate and the optical sheet of the backlight unit and the support member may be assembled in a configuration in which each is stacked in a predetermined position by being penetrated by the protruding portion formed on the back surface member or the frame-shaped member. According to one or more embodiments of the invention, because the frame-shaped member and the back surface member may be fixed in predetermined positions, in this configuration, the light-guide plate, the optical sheet, the support member, the frame-shaped member, and the back surface member may be assembled by being stacked in a predetermined position. By this, for example, the position of the light-guide plate, the optical sheet, and the support member to the back surface member or the frame-shaped member can be easily determined.

According to one or more embodiments of the invention, the display panel may have a quadrangle shape and the backlight unit may have a quadrangle shape corresponding to the quadrangle shape of the display panel. According to one or more embodiments of the invention, when the display panel has a quadrangle shape and the backlight unit has a quadrangle shape corresponding to the quadrangle shape of the display panel, the support member may press four sides that are the peripheral edge portion of the backlight unit from the front surface side, and the support member may be formed with at least four incised clinch portions, in positions corresponding to each of the four sides of the backlight unit, for positioning the display panel.

According to one or more embodiments of the invention, the support member is a member that may press the entirety of the four sides that are the peripheral edge portion of the backlight unit from the front. In this manner, the display panel and the backlight unit can be reliably strengthened. According to one or more embodiments of the invention, the incised clinch portions for position determining the display panel may be provided in the positions corresponding to each of the four sides. In this manner, the position of the display panel can be further easily determined.

Furthermore, according to one or more embodiments of the present invention, a display device as described in any of the above embodiments may comprise a support structure of an optical member. For example, the support member may be a cell guide, which may for example be made of metal.

According to the display device according to one or more embodiments of the present invention, the display panel can be strengthened while reducing the thickness and narrowing the frame.

One or more embodiments of the present invention provide a support member intended to be provided between a display panel and a backlight unit of the display device according to any of the embodiments described above. According to one or more embodiments, the support member may be intended to press at least a portion of a peripheral edge portion of the backlight unit from the front surface side of the display device. According to one or more embodiments, the support member may comprise at least one of a first protective member intended to contact the display panel and protect a top surface of the display panel and a second protective member intended to contact the backlight unit and protect a top surface of the backlight unit.

### [Brief Description of Drawings]

FIG. 1 is a diagram illustrating an external appearance of a display device according to one or more embodiments of a first example.
FIG. 2 is an exploded perspective view illustrating a display device according to one or more embodiments of the first example.
FIG. 3A is an enlarged cross-sectional view of a left side of a display device cut along the line A-A in FIG. 1.
FIG. 3B is an enlarged cross-sectional view of a right side of the display device cut along the line A-A in FIG. 1.
FIG. 4A is an external perspective view of a support member when viewed obliquely from the front, according to one or more embodiments of the first example.
FIG. 4B is an enlarged view of the region A1 in FIG. 4A.
FIG. 5 is an external perspective view of the support member when viewed obliquely from the back, according to one or more embodiments of the first example.
FIG. 6 is an exploded perspective view that enlarges portions, which correspond to a through-hole of an upper-portion support member, of the upper-portion support member, an optical sheet, a light-guide plate, and a rear frame, according to one or more embodiments of the first example.
FIG. 7 is an exploded perspective view of the support member, according to one or more embodiments of the first example.
FIG. 8 is an enlarged cross-sectional view of a right side of a display device according to one or more embodiments of a second example cut along the line A-A in FIG. 1.
FIG. 9 is an enlarged cross-sectional view of a right side of a display device according to one or more embodiments of a third example cut along the line A-A in FIG. 1.

### [Detailed Description of Embodiments]

Embodiments of the present invention will be described in detail below using the drawings. Each of the embodiments that will be described below illustrates examples of the present invention. Numerical values, shapes, materials, configuring elements, disposition positions of the configuring elements, connection modes, and the like illustrated in the embodiments below are examples and are not intended to limit the present invention. The present invention is specified by the scope of patent claims. Therefore, among the elements defined in the embodiments below, elements which are not described in the independent claims are not necessarily required and may be omitted.

### (First Example)

### <Overall Exemplary Configuration of a Display Device>

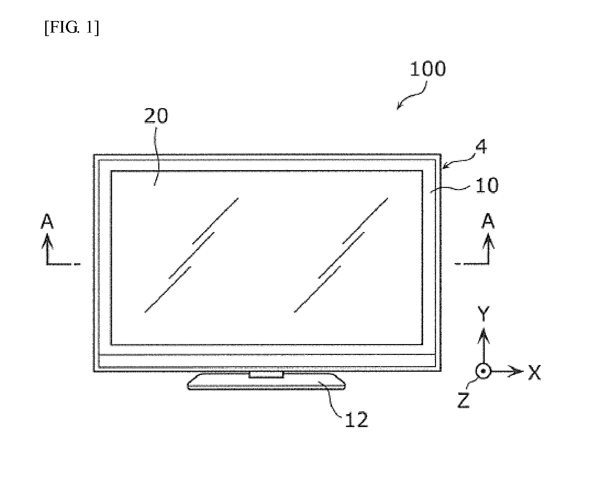

First, an overall configuration of a display device according to one or more embodiments of a first example will be described with reference to FIGS. 1 to 3. In these drawings, an X-axis direction is illustrated as a lateral direction, a Y-axis direction is illustrated as a vertical direction, and a Z-axis direction is illustrated as a longitudinal direction. Thus, for example, an X-axis plus-direction side is defined as a right direction, an X-axis minus-direction side is defined as a left direction, a Y-axis plus-direction side is defined as an up direction, a Y-axis minus-direction side is defined as a down direction, a Z-axis plus-direction side is defined as a front direction, and a Z-axis minus-direction side is defined as a rear direction. However, these are not limited to the above because situations can be considered where, depending on a usage aspect, the X-axis direction, the Y-axis direction, and the Z-axis direction are not the lateral direction, the vertical direction, and the longitudinal direction, respectively. A similar situation exists in other drawings.

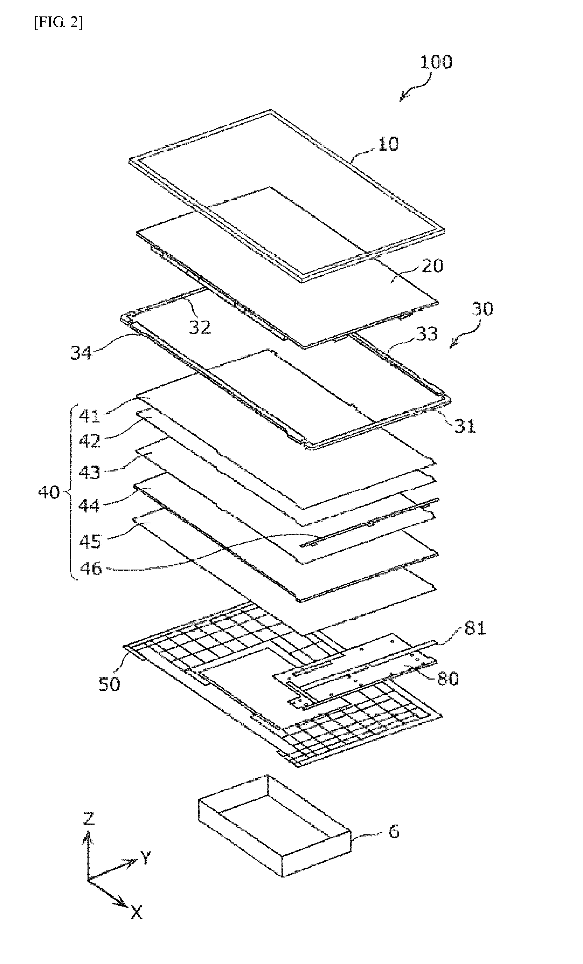

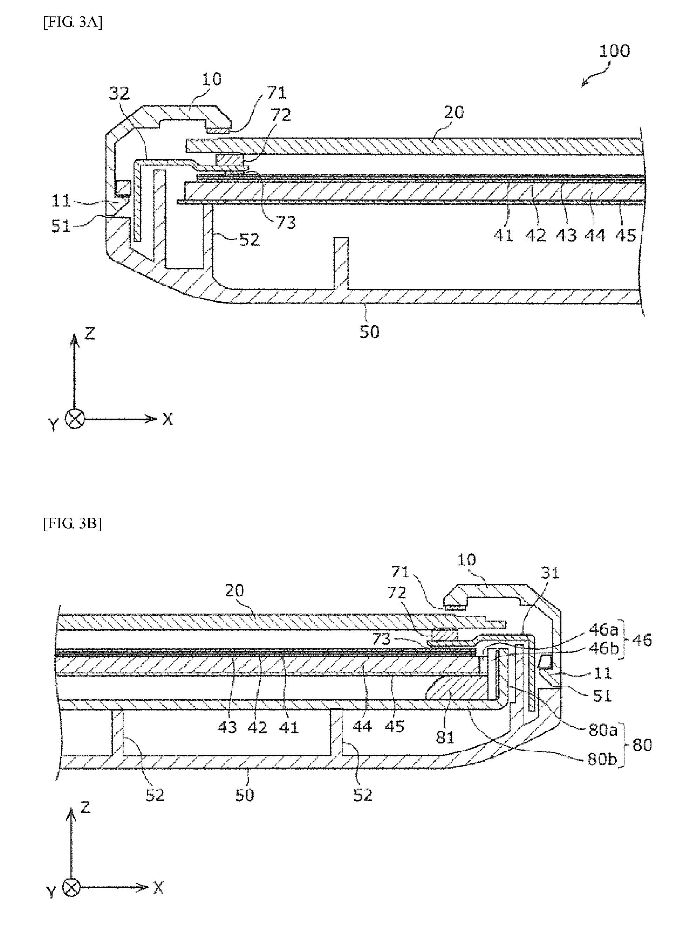

FIG. 1 is a diagram illustrating an external appearance of the display device according to one or more embodiments of the first example. FIG. 2 is an exploded perspective view illustrating a display device according to one or more embodiments of the first example. FIG. 3A is an enlarged cross-sectional view of a left side of a display device cut along the line A-A in FIG. 1. FIG. 3B is an enlarged cross-sectional view of a right side of the display device cut along the line A-A in FIG. 1.

As illustrated in FIGS. 1, 2, 3A, and 3B, a display device 100 according to one or more embodiments of the first example is a liquid crystal television receiver comprising an enclosure 4. The enclosure 4 comprises a front cabinet 10 acting as a frame member and a rear frame 50 acting as a back surface member being combined with each other.

According to one or more embodiments, the front cabinet 10 is configured in a frame shape and covers an outer peripheral portion of a liquid crystal cell 20 acting as a display panel that will be described below. Thus, for example, the front cabinet 10 is fixed to the rear frame 50 while pressing a peripheral edge portion of the liquid crystal cell 20 from a front surface side via a cushion member 71 (see below). As illustrated in FIGS. 3A and 3B, for example, the front cabinet 10 is fixed to the rear frame 50 by fitting a hook portion 11, which is disposed on both a left and right end of the front cabinet 10 and extends rearward, into an opening portion 51 provided in the rear frame 50. Thus, for example, the front cabinet 10 and the rear frame 50 may be fixed by a snap fit comprising the hook portion 11 and the opening portion 51. The front cabinet 10 is formed, for example, from resin.

According to one or more embodiments, the rear frame 50 is disposed so as to cover a back surface side of the liquid crystal cell 20. The rear frame 50 is formed, for example, from resin. A rear cover 6 is installed to a central portion in an outer surface of the rear frame 50. A power source substrate or the like (not illustrated) for supplying power to the liquid crystal cell 20 and the like is disposed on an inner portion of the rear cover 6. A stand 12 for supporting the enclosure 4 from below is installed to a lower end portion of the rear cover 6. The stand 12 does not have to be installed to the rear cover 6. Moreover, the rear cover 6 is formed, for example, from resin.

According to one or more embodiments as illustrated in FIGS. 2, 3A, and 3B, the liquid crystal cell 20, a cell guide 30, and a backlight unit 40 are disposed on an inner portion of the enclosure 4. The cell guide 30 is an example of a support member.

According to one or more embodiments, the liquid crystal cell 20 is an exemplary display panel whose outer shape may be a rectangular shape and is, for example, a liquid crystal display panel that can display an image at a resolution of 1920×1080. The liquid crystal cell 20 is a device that reproduces a desired color for each of a plurality of pixels by adjusting a transmission amount of light irradiated from the backlight unit 40 for a red, green, and blue color filter (not illustrated) provided to each of the plurality of pixels (for example, 1920×1080 pixels). Thus, for example, the liquid crystal cell 20 can display a desired image on a screen on a front surface by reproducing the desired color in each of the plurality of pixels.

According to one or more embodiments, the backlight unit 40 comprises a plurality of optical sheets 41 to 43, a light-guide plate 44, a reflective sheet 45, and a light-emitting diode (LED) bar 46 acting as a light source.

According to one or more embodiments, the plurality of optical sheets 41 to 43 is disposed on a front surface side of the light-guide plate 44. The plurality of optical sheets 41 to 43 includes, for example, a diffuser sheet that diffuses and makes uniform light irradiated from a front surface of the light-guide plate 44, a condenser sheet for efficiently irradiating a light made uniform to the liquid crystal cell 20, and the like.

According to one or more embodiments, the light-guide plate 44 is a plate-shaped member corresponding to a shape of the liquid crystal cell 20 that guides a light from the light source to an inner portion and irradiates the light guided to the inner portion toward the back surface side of the liquid crystal cell 20. The light-guide plate 44 reflects the light guided from a side so that the light is irradiated toward the entirety of a back surface of the liquid crystal cell 20. As illustrated in FIGS. 3A and 3B, for example, the plurality of optical sheets 41 to 43 and the light-guide plate 44 are each disposed in a configuration (for example a stacked configuration) where the entirety of an outer peripheral edge thereof overlaps the cell guide 30.

According to one or more embodiments, the LED bar 46 comprises a plurality of LEDs 46a being disposed on a main surface of an elongated plate-shaped member 46b by being lined up at predetermined intervals on one row along a lengthwise direction of the elongated plate-shaped member 46b. According to one or more embodiments as illustrated in FIG. 3B, the LED bar 46 is disposed on a right side of the light-guide plate 44 and irradiates a light toward a left side, thus, for example, a right side surface of the light-guide plate 44.

Furthermore, for example, according to one or more embodiments as illustrated in FIG. 3B, a heat sink 80 for disposing the LED bar 46 is disposed on a right side of the rear frame 50. The heat sink 80 is a member made of metal, whose cross-section is an L-shape. The heat sink 80 comprises a first heat sink 80a parallel to a Y-Z plane and a second heat sink 80b parallel to an X-Y plane. The first heat sink 80a is disposed on a right end of an inner portion of the rear frame 50. Moreover, the second heat sink 80b is disposed so as to contact an upper end of a rib 52 that is formed on the rear frame 50 and extends frontward from a surface on a back surface side of the rear frame 50. Thus, for example, the heat sink 80 is disposed on an end portion on a right-rear side in the inner portion of the rear frame 50. Moreover, with respect to the LED bar 46, the elongated plate-shaped member 46b is disposed along the first heat sink 80a. In this manner, for example, heat generated by the LED bar 46 can be dissipated efficiently because the LED bar 46 is disposed so as to contact the heat sink 80.

Furthermore, for example, according to one or more embodiments, a spacer 81 for determining the position in the longitudinal direction for a right end of the light-guide plate 44 is provided to the left of the LED bar 46 in a state where the spacer 81 contacts a portion more rearward than the second heat sink 80b and the LED 46a of the elongated plate-shaped member 46b of the LED bar 46. The light-guide plate 44 is disposed in a position coinciding with an optical axis of the LED 46a of the LED bar 46 due to the spacer 81 via the reflective sheet 45.

According to one or more embodiments, the cell guide 30 may be provided between the liquid crystal cell 20 and the backlight unit 40 and may be a member made of a metal such as steel, electrically chromate coated (SECC) and presses at least a portion of a peripheral edge portion of the backlight unit 40. However, a cell guide is not limited to SECC and may comprise aluminum or an aluminum alloy, copper or a copper alloy, stainless steel, or the like. For example, the cell guide 30 may be a member that presses four sides that are the peripheral edge portion of the backlight unit 40 from the front surface side.

Furthermore, for example, according to one or more embodiments, the cell guide 30 may be disposed between the liquid crystal cell 20 and the backlight unit 40. For example, according to one or more embodiments, the display device 100 may comprise a cushion member 72, which acts as a first protective member that protects a top surface of the liquid crystal cell 20, and a cushion member 73, which acts as a second protective member that is disposed in a position contacting the backlight unit 40 and protects a top surface of the backlight unit 40. Thus, for example, the cushion member 72 may be a region on the top surface of the liquid crystal cell 20 and may protect a region where the cell guide 30 overlaps the liquid crystal cell 20 in a Z-axis direction view. Moreover, the cushion member 73 may be a region on the top surface of the backlight unit 40 and may protect a region where the cell guide 30 overlaps the backlight unit 40 in the Z-axis direction view. Moreover, the cushion members 72, 73 may be porous, have elasticity, and be formed, for example, by foaming a resin (such as polyurethane). A cushion member 71 disposed on the front cabinet 10 may also comprise a material similar to that of the cushion members 72, 73. However, the first protective member and a second protective member are not limited to the cushion members 72, 73 such as described above and may comprise a sealing material that includes, for example, a resin of a silicone type, a resin of a urethane type, or the like. When using the sealing material as the first protective member and the second protective member, assembly efficiency can be improved in an assembly process because the sealing material can be applied to the cell guide 30 by a machine. Thus, for example, the cushion members 71 to 73 may be elastic members that may comprise a resin (that includes a rubber-like substance) and may protect the top surface of the liquid crystal cell 20 or the top surface of the backlight unit 40.

According to one or more embodiments, the cushion member 73 disposed on a backlight unit 40 side of the cell guide 30 may be provided in an end portion (including an inner peripheral edge) position of an inner peripheral side of the cell guide 30. In this situation, at least a top surface of the cushion member 73 may comprise a material that absorbs a light from the backlight unit 40. For example, an antireflection treatment that prevents the light irradiated from the backlight unit 40 from being reflected by the cell guide 30 may be applied to an end portion (an end portion, of the cell guide 30, toward a center of a screen) on an inner side of the cell guide 30. By this, for example, the cushion member 73 can prevent the light irradiated from the backlight unit 40 from being reflected at a back surface side of the cell guide 30.

### < Exemplary Configuration of Cell Guide>

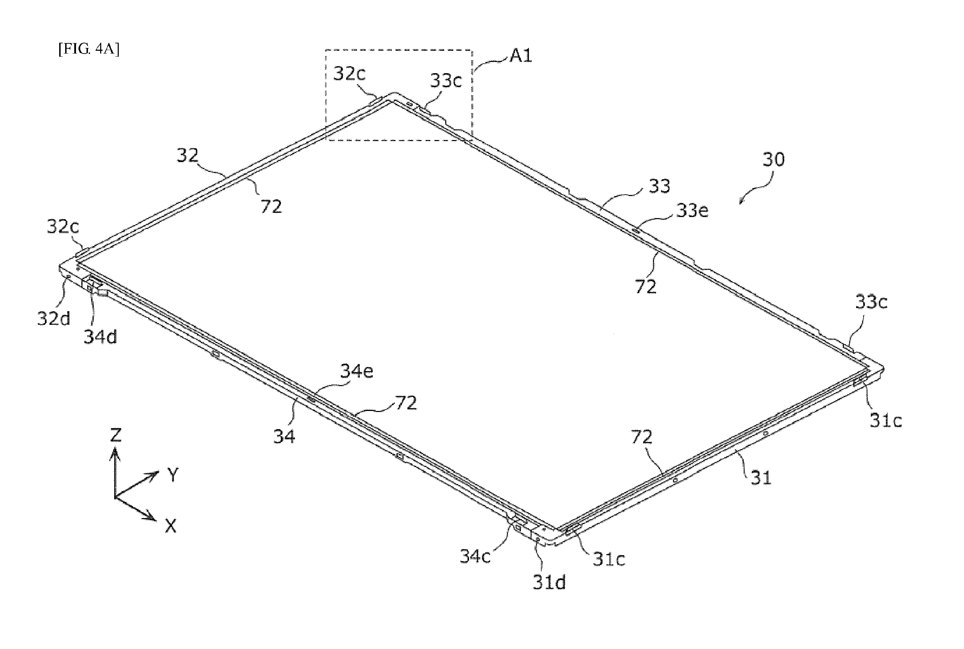

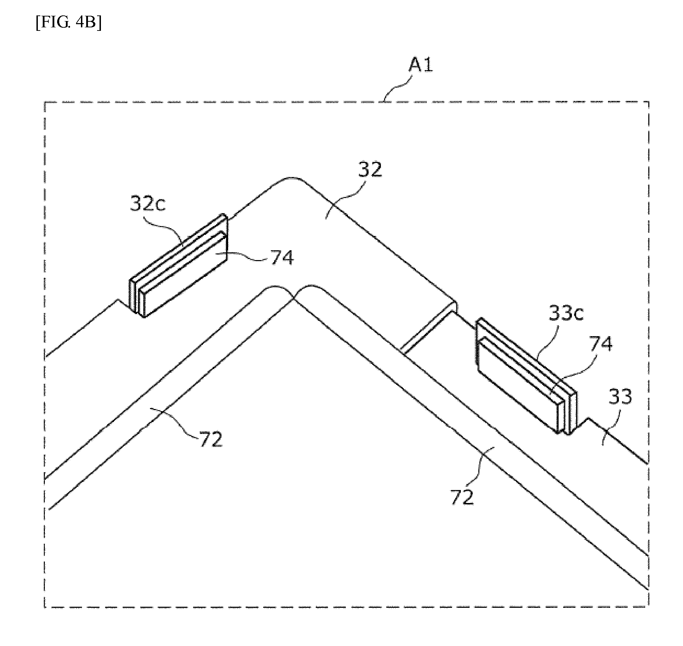

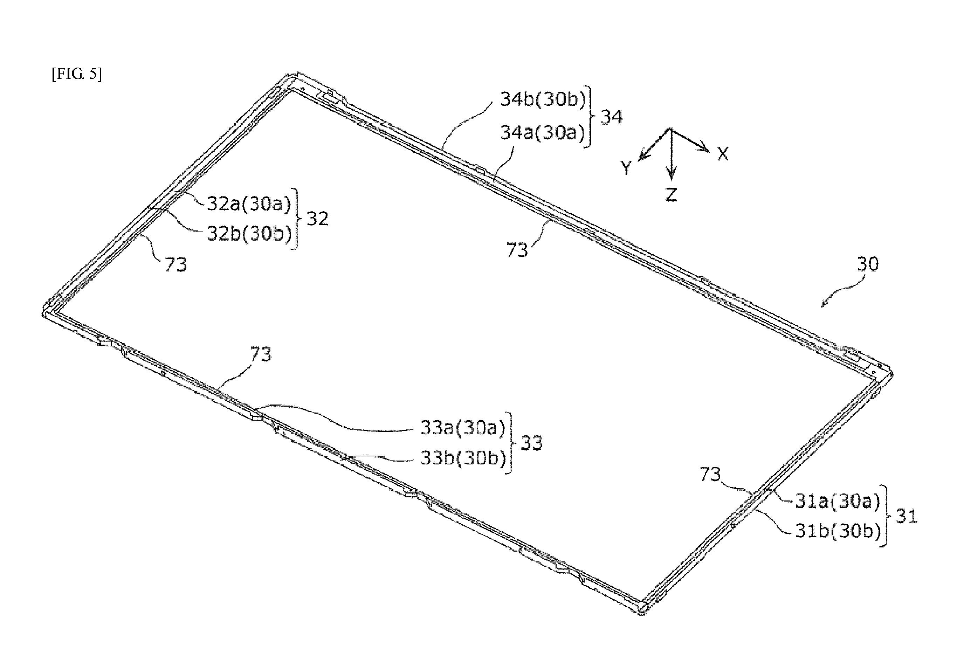

FIG. 4A is an external perspective view of the cell guide when viewed obliquely from the front according to one or more embodiments. FIG. 4B is an enlarged view of the region A1 in FIG. 4A. FIG. 5 is an external perspective view of the cell guide when viewed obliquely from the back according to one or more embodiments.

According to one or more embodiments of the cell guide 30 as illustrated in FIG. 4A, a right-portion cell guide 31, a left-portion cell guide 32, an upper-portion cell guide 33, and a lower-portion cell guide 34 are disposed in positions respectively corresponding to four sides of the backlight unit 40. Thus, for example, the right-portion cell guide 31 may be disposed in a position corresponding to a side on a right end of the backlight unit 40, the left-portion cell guide 32 may be disposed in a position corresponding to a side on a left end of the backlight unit 40, the upper-portion cell guide 33 may be disposed in a position corresponding to a side on an upper end of the backlight unit 40, and the lower-portion cell guide 34 may be disposed in a position corresponding to a side on a lower end of the backlight unit 40.

Furthermore, for example, according to one or more embodiments of the cell guide 30, eight incised clinch portions 31c, 32c, 33c, 34c for determining the position of the liquid crystal cell 20 may be formed in positions respectively corresponding to the four sides of the backlight unit 40. Specifically, with respect to the right-portion cell guide 31, the incised clinch portion 31c that regulates the liquid crystal cell 20 so as to move to a right side may be formed on both end portions thereof. Moreover, with respect to the left-portion cell guide 32, the incised clinch portion 32c that regulates the liquid crystal cell 20 so as to move to a left side may be formed on both end portions thereof. Moreover, with respect to the upper-portion cell guide 33, the incised clinch portion 33c that regulates the liquid crystal cell 20 so as to move to an upper side may be formed on both end portions thereof. Moreover, with respect to the lower-portion cell guide 34, the incised clinch portion 34c that regulates the liquid crystal cell 20 so as to move to a lower side may be formed on both end portions thereof. Moreover, as illustrated in FIG. 4B, a cushion member 74 acting as a third protective member may be respectively disposed on a surface on an inner side of each incised clinch portion 31c, 32c, 33c, 34c. The cushion member 74 may be of a material similar to that of the cushion members 72, 73. In this manner, for example, when the cushion member 74 is disposed on a surface on an inner side of the eight incised clinch portions 31c, 32c, 33c, 34c of the cell guide 30, scratching of the liquid crystal cell 20 can be prevented because the cell guide 30 provides a protective member even in a position that contacts a side surface of the liquid crystal cell 20.

Furthermore, for example, according to one or more embodiments, the cell guide 30, as illustrated in FIG. 5, may comprise a first support portion 30a, which may press a front surface side of the peripheral edge portion of the backlight unit 40, and a second support portion 30b, which may be formed continuously from an outer peripheral edge of the first support portion 30a toward a back surface side and disposed to a side of the backlight unit 40. The right-portion cell guide 31, the left-portion cell guide 32, the upper-portion cell guide 33, and the lower-portion cell guide 34, which may configure the cell guide 30, may be each formed by press processing an elongated plate-shaped member made of metal so that a cross section is L-shaped. Thus, for example, the right-portion cell guide 31 may comprise a first right-portion cell guide 31 a, which is a portion configuring a right side of the first support portion 30a, and a second right-portion cell guide 31b, which is a portion configuring a right side of the second support portion 30b. Moreover, for example, the left-portion cell guide 32 may comprise a first left-portion cell guide 32a, which is a portion configuring a left side of the first support portion 30a, and a second left-portion cell guide 32b, which is a portion configuring a left side of the second support portion 30b. Moreover, for example, the upper portion cell guide 33 may comprise a first upper-portion cell guide 33a, which is a portion configuring an upper side of the first support portion 30a, and a second upper-portion cell guide 33b, which is a portion configuring an upper side of the second support portion 30b. Moreover, for example, the lower portion cell guide 34 may comprise a first lower-portion cell guide 34a, which is a portion configuring a lower side of the first support portion 30a, and a second lower-portion cell guide 34b, which is a portion configuring a lower side of the second support portion 30b. Moreover, for example, press processing may be performed not only to form the first support portion 30a and the second support portion 30b but also to form the eight incised clinch portions 31c, 32c, 33c, 34c on each cell guide 31 to 34.

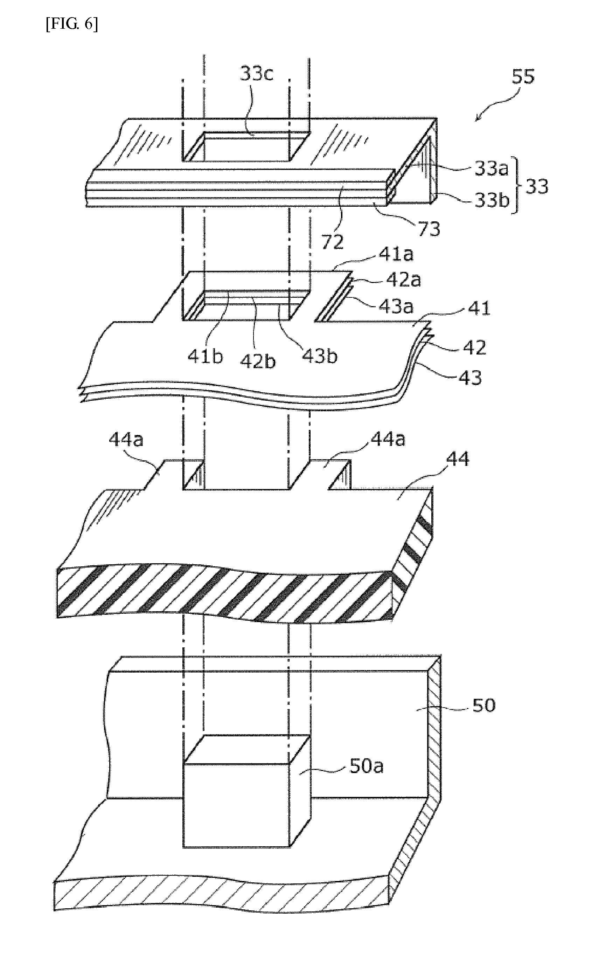

According to one or more embodiments as illustrated in FIG. 6, the display device 100 may further comprise a position regulating portion 55 for regulating the cell guide 30, the plurality of optical sheets 41 to 43, and the light-guide plate 44 so as to move relatively in either the vertical or the lateral direction relative to the front cabinet 10 or the rear frame 50.

Furthermore, according to one or more embodiments as illustrated in FIG. 4A, through-holes 33e, 34e acting as a third penetration portion may be formed near a center in the lateral direction in the upper-portion cell guide 33 and the lower-portion cell guide 34, respectively.

FIG. 6 is an exploded perspective view that enlarges portions according to one or more embodiments, which correspond to a through-hole of an upper-portion cell guide, of the upper-portion cell guide, an optical sheet, a light-guide plate, and a rear frame.

According to one or more embodiments as illustrated in FIG. 6, in a position, in the cell guide 30, corresponding to the through-hole 33e formed in the upper-portion cell guide 33, with the plurality of optical sheets 41 to 43, through-hole forming portions 41a, 42a, 43a of sheet shapes that project toward an upper portion may be respectively formed near a center in the lateral direction of an upper portion of the plurality of optical sheets 41 to 43. Moreover, through-holes 41b, 42b, 43b acting as a second penetration portion may be formed, in each through-hole forming portion 41a, 42a, 43a, in a position coinciding with the through-hole 33e on the X-Y plane. Thus, for example, the plurality of optical sheets 41 to 43 may comprise the through-hole forming portions 41a, 42a, 43a, which may be regions for forming the through-holes 41b, 42b, 43b. Moreover, with respect to the light-guide plate 44, a pair of projecting portions 44a that acts as a first penetration portion and projects upward at a position coinciding with lateral outer sides of the through-hole 33e may be formed. Thus, for example, a width between the pair of projecting portions 44a and a width in the lateral direction of the through-hole 33e may be formed so as to coincide. The first penetration portion formed in the light-guide plate may be formed as a through-hole.

Furthermore, according to one or more embodiments, the rear frame 50 may comprise a protruding portion 50a that may extend frontward from a back surface thereof and may penetrate the through-holes 33e, 41b, 42b, 43b and a space between the pair of projecting portions 44a. With this upper-portion cell guide 33, plurality of optical sheets 41 to 43, and light-guide plate 44, each may be disposed in a predetermined position on the rear frame 50 by each through-hole 33e, 41b, 42b, 43b and the space between the pair of projecting portions 44a being stacked in a state of being penetrated by the projecting portion 44a of the rear frame 50. Thus, for example, by the upper-portion cell guide 33, the plurality of optical sheets 41 to 43, and the light-guide plate 44 being stacked in the configuration described above, the entirety of the outer peripheral edge of the plurality of optical sheets 41 to 43 and the light-guide plate 44, respectively, is disposed so as to overlap the cell guide 30.

Thus, for example, according to one or more embodiments, the position regulating portion 55 may comprise the protruding portion 50a of the rear frame 50; the through-hole 33e of the upper-portion cell guide 33 of the cell guide 30; the through-holes 41b, 42b, 43b of the plurality of optical sheets 41 to 43; and the projecting portion 44a of the light-guide plate 44. Here, for example, because the cell guide 30 position regulates the liquid crystal cell 20 by the eight incised clinch portions 31c, 32c, 33c, 34c so that the liquid crystal cell 20 does not move in the vertical and lateral directions relative to the cell guide 30, the enclosure 4, the liquid crystal cell 20, the cell guide 30, and the backlight unit 40 are each in a state where movement in the vertical and lateral directions is regulated relatively.

According to one or more embodiments, a protruding portion for penetrating the through-hole 33e of the upper-portion cell guide 33 of the cell guide 30, the through-holes 41b, 42b, 43b of the plurality of optical sheets 41 to 43, and the projecting portion 44a of the light-guide plate 44, which act as the first to third penetration portions, does not have to be formed on the rear frame 50 and may be formed on the front cabinet 10. Thus, for example, a position regulating portion may be of any form able to regulate movement of the cell guide 30 and the backlight unit 40 in the vertical and lateral directions relative to the enclosure 4.

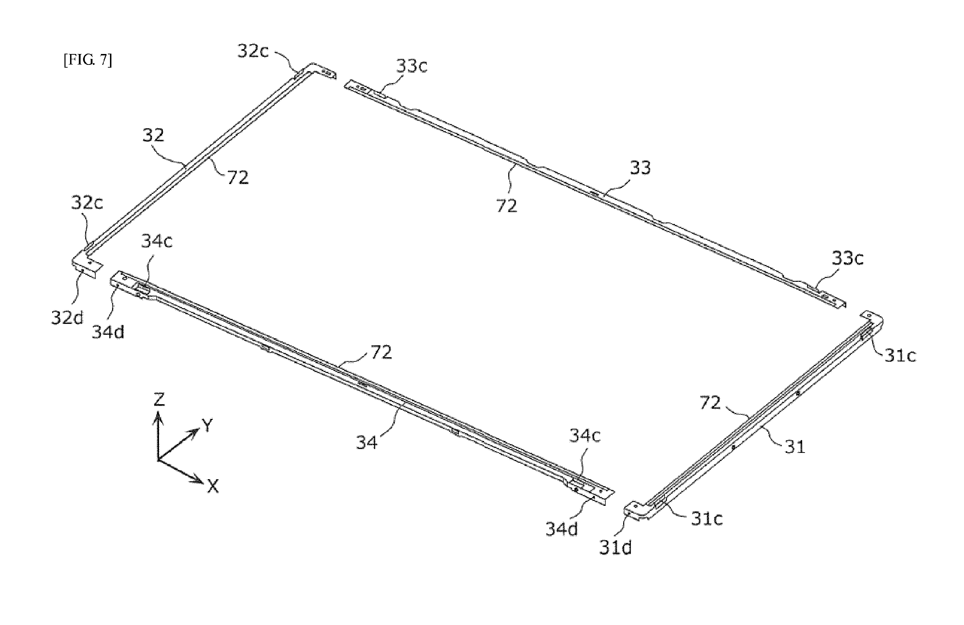

FIG. 7 is an exploded perspective view of the cell guide according to one or more embodiments.

According to one or more embodiments as illustrated in FIG. 7, the right-portion cell guide 31, the left-portion cell guide 32, the upper-portion cell guide 33, and the lower-portion cell guide 34, which configure the cell guide 30, each may have fastening holes 31d, 32d, 33d, 34d for being fastened to a member adjacent to both ends. Thus, for example, the cell guide 30 may be screwed in place in a state of being assembled as in FIG. 4A. The fastening holes 31d, 32d, 33d, 34d may be formed in the second support portion 30b but may be formed in the first support portion 30a. Thus, for example, the cell guide 30 is screwed in place from the vertical and lateral directions. However, the cell guide may be screwed in place from the longitudinal direction. Moreover, the right-portion cell guide 31, the left-portion cell guide 32, the upper-portion cell guide 33, and the lower-portion cell guide 34 do not need to be fastened by being screwed in place and may be fastened with rivets, by crimping after overlapping each end portion, by using a snap fit, or by welding or deposition.

### (Technical effects)

(1) With the display device 100 according to one or more embodiments of the first example, because the cell guide 30 comprising a metal material is provided between the liquid crystal cell 20 and the backlight unit 40, the peripheral edge portions of the liquid crystal cell 20 and the backlight unit 40 can be strengthened without requiring a bezel made of metal, that presses a liquid crystal cell disposed on a conventional display device from the front surface side.
   For example, because the cell guide 30 comprising the metal material contacts the liquid crystal cell 20 and the backlight unit 40, there is a concern that the cell guide 30 might scratch the liquid crystal cell 20 or the backlight unit 40 when an impact is applied from the outside. To resolve this, the cushion members 72, 73 that are disposed in positions, on the cell guide 30, contacting the liquid crystal cell 20 and the backlight unit 40 are disposed. Because of this, the cell guide 30 can be prevented from scratching the liquid crystal cell 20 or the backlight unit 40.
(2) Furthermore, with the display device 100 according to one or more embodiments of the first example, because the antireflection treatment that prevents the light irradiated from the backlight unit 40 from being reflected by the cell guide 30 is applied to the end portion, of the cell guide 30, toward the center of the screen, the light irradiated from the backlight unit 40 can be prevented from being reflected by the back surface side of the cell guide 30. By this, for example, the light can be prevented from being irradiated toward the back surface side of the liquid crystal cell 20 from an unintended direction and a quality of an image displayed on the display panel can be improved.
(3) Furthermore, with the display device 100 according to one or more embodiments of the first example, because the antireflection treatment is applied to the end portion, of the cell guide 30, toward the center of the screen by the cushion member 73 being disposed, the cell guide 30 can be prevented from scratching the backlight unit 40 and the light irradiated from the backlight unit 40 can be prevented from being reflected by the back surface side of the cell guide 30. In this manner, because the cushion member 73 combines two functions of scratch prevention and reflection prevention, when compared to a configuration that realizes each function with individual components, the number of components can be reduced. Because of this, for example, a production cost of the display device 100 can be reduced.
(4) Furthermore, with the display device 100 according to one or more embodiments of the first example, because with the cell guide 30, the second support portion 30b is formed on a lateral side of the backlight unit 40 in addition to the first support portion 30a that presses the front surface side of the peripheral edge portion of the backlight unit 40, a strength of the backlight unit 40 can be further ensured. Moreover, because the cell guide 30 has an L-shaped cross section due to the first support portion 30a and the second support portion 30b, a strength thereof can be further ensured compared to when, for example, the cell guide 30 comprises the first support portion 30a alone.
(5) Furthermore, with the display device 100 according to one or more embodiments of the first example, because the position regulating portion 55 is provided, relative positions of the light-guide plate 44 and the plurality of optical sheets 41 to 43, which configure the backlight unit 40, and the cell guide 30, respectively, and the rear frame 50 can be regulated so as to shift in the vertical and lateral directions. Because of this, for example, the stacked configuration can be easily maintained.
(6) Furthermore, with the display device 100 according to one or more embodiments of the first example, the light-guide plate 44 and the optical sheets 41 to 43 of the backlight unit 40 and the cell guide 30 are assembled in a configuration (stacked configuration) where each is stacked in a predetermined position by being penetrated by the protruding portion 50a formed on the rear frame 50. Moreover, because the front cabinet 10 and the rear frame 50 are fixed in predetermined positions with the snap fit, by at least this configuration, the light-guide plate 44, the plurality of optical sheets 41 to 43, the cell guide 30, the front cabinet 10, and the rear frame 50 are assembled by being stacked in a predetermined position. By this, for example, position determination of the light-guide plate 44, the plurality of optical sheets 41 to 43, and the cell guide 30 to the front cabinet 10 or the rear frame 50 can be easily performed.
(7) Furthermore, with the display device 100 according to one or more embodiments of the first example, because the cell guide 30 is a member that presses the entirety of the four sides that are the peripheral edge portion of the backlight unit 40 from the front, the liquid crystal cell 20 and the backlight unit 40 can be reliably strengthened. Moreover, because the incised clinch portions 31c, 32c, 33c, 34c for position determining the liquid crystal cell 20 are provided in the positions corresponding to each of the four sides, position determination of the liquid crystal cell 20 can be further easily performed.

### (Second Example)

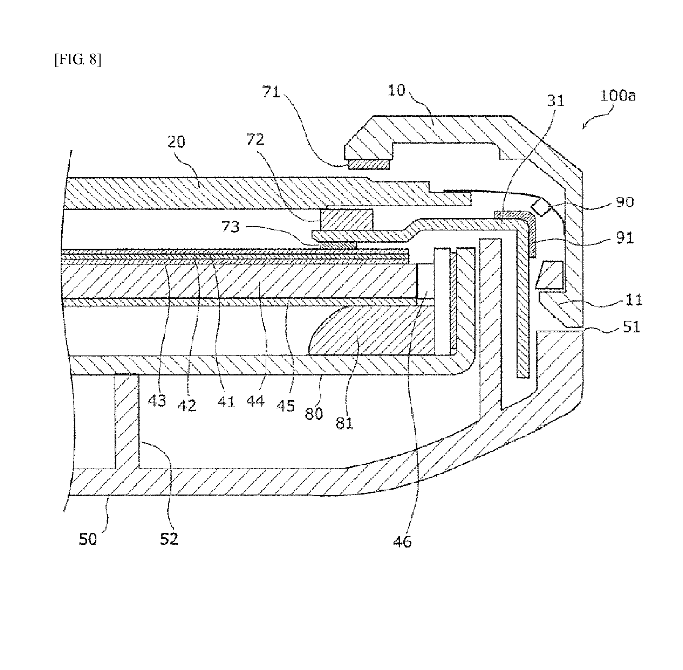

FIG. 8 is an enlarged cross-sectional view of a right side of a display device according to one or more embodiments of a second example cut along the line A-A in FIG. 1. In FIG. 8, reference numbers identical to reference numbers in one or more embodiments of the first example will be assigned to elements that are identical or substantially similar to elements described in one or more embodiments of the first example. Because of this, description of these elements will be omitted.

According to one or more embodiments as illustrated in FIG. 8, a driver circuit 90 that is connected to the liquid crystal cell 20 is disposed to a side of the cell guide 30. While not mentioned in particular in one or more embodiments of the first example, an insulating member 91 may be provided between the cell guide 30 and the driver circuit 90 when the driver circuit 90 is disposed to the side of the cell guide 30. Thus, for example, the cell guide 30 may be subjected to an insulating treatment for being insulated from the driver circuit 90, which is an example of an electrical component, from among a plurality of electrical components, disposed to the side of the cell guide 30. For the insulating treatment, the insulating member 91 does not have to be disposed as in FIG. 8, and the insulating treatment may be for example obtained by affixing an insulating sheet on a surface on a driver circuit 90 side of the cell guide 30.

With a display device 100a according to one or more embodiments of the second example, because the cell guide 30 comprises a metal material having electrical conductivity and the insulating treatment is applied between the cell guide 30 and the driver circuit, which is among the plurality of electrical components, disposed to the side of the cell guide 30, the driver circuit 90 can be prevented from being shorted by the cell guide 30 when, for example, the driver circuit 90 contacts the cell guide 30 due to an impact from the outside. By this, a failure of the driver circuit 90 or another electrical component due to shorting via the cell guide 30 can be prevented.

### (Third Example)

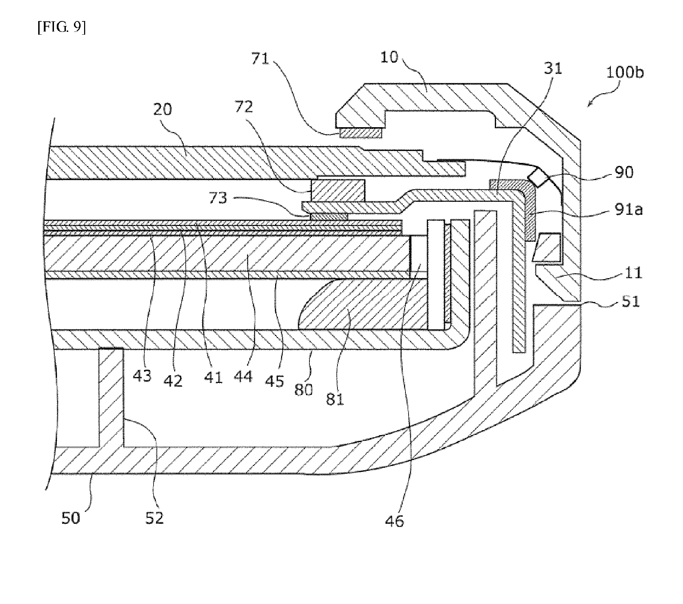

FIG. 9 is an enlarged cross-sectional view of a right side of a display device according to one or more embodiments of a third example cut along the line A-A in FIG. 1. In FIG. 9, reference numbers identical to reference numbers in one or more embodiments of the first example and one or more embodiments of the second example will be assigned to elements identical or substantially similar to elements described in one or more embodiments of the first example and one or more embodiments of the second example. Because of this, description of these elements will be omitted.

According to one or more embodiments as illustrated in FIG. 9, the driver circuit 90 that is disposed with the liquid crystal cell 20 in a manner similar to that of one or more embodiments of the second example is disposed to the side of the cell guide 30. In a display device 100b of one or more embodiments of the third example, an insulating member 91a with high thermal conductivity thermally connects the cell guide 30 and the driver circuit 90.

With the display device 100b according to one or more embodiments of the third example described above, because the cell guide 30 and the driver circuit 90, from among the plurality of electrical components, disposed to the side of the cell guide 30 are thermally connected by the insulating member 91a comprising a material with high thermal conductivity, heat generated by the driver circuit 90 can be dissipated efficiently by the cell guide 30, which may comprise the metal material and have a high thermal conductivity and heat radiation properties.

### (Modified Examples)

(1) In the display device 100 according to one or more embodiments of the first example described above, two cushion members 72, 73 are disposed on both a front surface side and the back surface side of the cell guide 30; however, the present invention is not limited thereto. According to one or more embodiments, at least one from among the cushion members 72, 73 may be provided. Thus, for example, in such a display device, the liquid crystal cell 20 or the backlight unit 40 on a side where a cushion member is provided can be prevented from being scratched. Also, the first and second cushion members are merely exemplary forms of first and second protective members.
(2) In the display device 100 according to one or more embodiments of the first example described above, the position regulating portion 55 is formed in one location in an upper portion in a center in the lateral direction of the display device 100 but may be formed in two or more locations. When providing the position regulating portion in two or more locations, in order to not be affected by expansion and contraction due to temperature changes of the optical sheet and the light-guide plate, one location may be a fixed end while other locations may be free ends.
(3) In the display devices 100, 100a, 100b according to one or more embodiments of the first to third examples described above, the cell guide 30 comprises the metal material. However, the cell guide 30 may comprise any material having rigidity equal to or greater than the rigidity of a metal material. The cell guide may for example comprise ceramic, carbon fiber, or the like.
(4) In the display devices 100, 100a, 100b according to one or more embodiments of the first to third examples described above, the shape of the liquid crystal cell 20 is rectangular but the shape is not limited thereto and may be quadrangular, square, circular, elliptical, or the like. Moreover, the liquid crystal cell 20 is not limited to being planar and may be curved.
(5) In the display devices 100, 100a, 100b according to one or more embodiments of the first to third examples described above, the cell guide 30 comprises the four members of the right-portion cell guide 31, the left-portion cell guide 32, the upper-portion cell guide 33, and the lower-portion cell guide 34 but is not limited thereto. The cell guide may comprise one member or may comprise two members in combination. When the cell guide comprises one member, with the light-guide plate and the optical sheet, respectively, it is sufficient that the entirety of an outer peripheral portion thereof is disposed so as to overlap at least one from among a front cabinet and the cell guide.
   Furthermore, for example, the cell guide 30 according to one or more embodiments is a member comprising the first support portion 30a, which presses a front surface side of the backlight unit 40, and the second support portion 30b, which covers a side surface of the backlight unit 40, and whose cross section is L-shaped but the cell guide is not limited thereto and only the first support portion 30a may be provided and any configuration equivalent thereto may be used. Even in this situation, the cell guide has an effect of strengthening the outer peripheral edges of the liquid crystal cell 20 and the backlight unit 40.
   Furthermore, for example, the cell guide 30 according to one or more embodiments is provided in a position corresponding to the liquid crystal cell 20 and four sides of the backlight unit 40. However, the cell guide 30 may be provided in a position corresponding to at least one side. Even in this situation, the cell guide 30 has an effect of strengthening the liquid crystal cell 20 and the backlight unit 40.
(6) In the display devices 100, 100a, 100b according to one or more embodiments of the first to third examples described above, the incised clinch portions 31c, 32c, 33c, 34c for position determining the liquid crystal cell 20 are provided. However, a position regulating portion for position determination is not limited to being formed by incised clinch portions and may be formed by convex pressing or may be studs raised by welding.
(7) In the display devices 100, 100a, 100b according to one or more embodiments of the first to third examples described above, the antireflection treatment that prevents the light irradiated from the backlight unit 40 from being reflected by the cell guide 30 is applied to the end portion on an inner side of the cell guide 30 by disposing the cushion member 73. However, the antireflection treatment is not limited to an antireflection treatment obtained by the cushion member 73. For example, the antireflection treatment may be applied to a surface on the back surface side of the first support 30a of the cell guide 30 and may be performed by coating paint (for example, a black paint) comprising a material that absorbs light on a region more toward the center of the screen than at least the cushion member 73 or may be performed by affixing a tape (for example, a tape whose top surface is black) comprising the material that absorbs light on this region.
(8) In the display devices 100, 100a, 100b according to one or more embodiments of the first to third examples described above, the backlight unit 40 is a backlight unit of an edge-light type. However, the backlight unit is not limited thereto and a backlight unit of a direct type may be used.

### [Industrial Applicability]

One or more embodiments of the present invention is useful as a display device-for example, a liquid crystal display, a liquid crystal television, or the like-that can reduce the thickness and narrow the frame while strengthening the display panel.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims. So, for example, any of the embodiments of the first to third examples and of the modified examples may be combined together.

### [Explanation of Reference Numbers]

4 Enclosure
6 Rear cover
10 Front cabinet
11 Hook portion
12 Stand
20 Liquid crystal cell
30 Cell guide
30a First support portion
30b Second support portion
31 Right-portion cell guide
31a First right-portion cell guide
31b Second right-portion cell guide
31c, 32c, 33c, 34c Incised clinch portion
31d, 32d, 33d, 34d Fastening hole
32 Left-portion cell guide
32a First left-portion cell guide
32b Second left-portion cell guide
33 Upper-portion cell guide
33a First upper-portion cell guide
33b Second upper-portion cell guide
33e, 34e Through-hole
34 Lower-portion cell guide
34a First lower-portion cell guide
34b Second lower-portion cell guide
40 Backlight unit
41, 42, 43 Optical sheet
41a, 42a, 43a Through-hole forming portion
41b, 42b, 43b Through-hole
44 Light-guide plate
44a Projecting portion
45 Reflective sheet
46 LED bar
46a LED
46b Elongated plate-shaped member
50 Rear frame
50a Protruding portion
51 Opening portion
52 Rib
55 Position regulating portion
71 to 74 Cushion member
80 Heat sink
80a First heat sink
80b Second heat sink
81 Spacer
90 Driver circuit
91, 91a Insulating member
100, 100a, 100b Display device

## Claims

1. A display device (100; 100a; 100b), comprising:
a display panel (20) configured to display an image on a screen on a front surface of the display panel (20);
a backlight unit (40) that covers a back surface side of the display panel (20) and is configured to irradiate light toward the back surface side of the display panel (20);
a back surface member (50) disposed on a back surface side of the backlight unit (40);
a frame-shaped member (10) that presses a peripheral edge portion of the display panel (20) from a front surface side of the display panel (20) and is fixed to the back surface member (50) ; and
a support member (30) provided between the display panel (20) and the backlight unit (40), wherein
the support member (30) presses at least a portion of a peripheral edge portion of the backlight unit (40) from the front surface side, and
the display device (100; 100a; 100b) further comprises at least one of a first protective member (72) that is disposed on the support member (30) in a position contacting the display panel (20) and that protects a top surface of the display panel (20) and a second protective member (73) that is disposed on the support member (30) in a position contacting the backlight unit (40) and that protects a top surface (41) of the backlight unit (40).

2. The display device (100; 100a; 100b) according to claim 1, wherein
an end portion of the support member (30) toward a center of the screen is subjected to an antireflection treatment that prevents light irradiated from the backlight unit (40) from being reflected by the support member (30).

3. The display device (100; 100a; 100b) according to claim 2, wherein
the display device (100; 100a; 100b) comprises the second protective member (73), and
the antireflective treatment is applied to the end portion of the support member (30) toward the center of the screen by disposing the second protective member (73) on the support member (30).

4. The display device (100; 100a; 100b) according to any of claims 1 to 3, wherein
the support member (30) comprises:
a first support portion (30a) that presses the peripheral edge portion of the backlight unit (40) from the front surface side; and
a second support portion (30b) formed continuously along an outer peripheral edge of the first support portion (30a) toward a back surface side of the first support portion (30a) and disposed on a side of the backlight unit (40).

5. The display device (100; 100a; 100b) according to any of claims 1 to 4, wherein
the support member (30) comprises an electrically conductive material and is
provided with an insulation treatment that electrically insulates the support member (30) from any electrical component (90) disposed on a side of the support member (30).

6. The display device (100; 100a; 100b) according to claim 5, wherein
the support member (30) is thermally connected to one or more electrical components (90) disposed on a side of the support member (30).

7. The display device (100; 100a; 100b) according to any of claims 1 to 6, wherein
the backlight unit (40) comprises:
a light source (46);
a light-guide plate (44) configured to guide light from the light source to an inner portion of an enclosure (4) of the display device (100; 100a; 100b) and irradiate the light guided to the inner portion toward the back surface side of the display panel (20); and
an optical sheet (41-43) disposed on a front surface side of the light-guide plate (44), wherein
the light-guide plate (44) and the optical sheet (41-43) are each disposed in a stacked configuration in which the entirety of an outer peripheral edge of the light-guide plate (44) and the optical sheet (41-43) overlaps at least one of the frame-shaped member (10) and the support member (30) when viewed from the front.

8. The display device (100; 100a; 100b) according to claim 7, wherein the display device (100; 100a; 100b) further comprises:
a position regulating portion (55) that regulates movement of the light-guide plate (44), the optical sheet (41-43), the support member (30), and at least one of the frame-shaped member (10) and the back surface member (50) in a direction in which the light-guide plate (44), the optical sheet (41-43), the support member (30), and the at least one of the frame-shaped member (10) and the back surface member (50) intersect in a longitudinal direction.

9. The display device (100; 100a; 100b) according to claim 8, wherein
the position regulating portion (55) comprises:
a protruding portion (50a) formed on the back surface member (50) or the frame-shaped member (10);
a first penetration portion (44a) formed in an end portion of the light-guide plate (44) and penetrated, in the stacked configuration, by the protruding portion (50a) at the end portion of the light-guide plate (44);
a second penetration portion (41b, 42b, 43b) formed in the optical sheet (41-43) and penetrated, in the stacked configuration, by the protruding portion (50a) along with the first penetration portion (44a); and
a third penetration portion (33e, 34e) formed in the support member (30) and penetrated, in the stacked configuration, by the protruding portion (50a) along with the first penetration portion (44a) and the second penetration portion (41b, 42b, 43b).

10. The display device (100; 100a; 100b) according to claim 8 or 9, wherein
the display panel (20) has a quadrangle shape,
the backlight unit (40) has a quadrangle shape corresponding to the quadrangle shape of the display panel (20),
the support member (30) presses four sides that are the peripheral edge portion of the backlight unit (40) from the front surface side, and
the support member (30) is formed with at least four incised clinch portions (31 c, 32c, 33c, 34c), in positions corresponding to each of the four sides of the backlight unit (40), for positioning the display panel (20).

11. The display device according to any one of claims 1-10, wherein the support member (30) is a cell guide (30).

12. The display device according to claim 11, wherein the cell guide (30) comprises metal.

13. The display device according to any one of claims 1-11, wherein the support member (30) comprises a material having rigidity equal to or greater than the rigidity of a metal.

14. A support member (30) intended to be provided between a display panel (20) and a backlight unit (40) of the display device (100; 100a; 100b) according to any of claims 1 to 13, wherein:
the support member (30) is intended to press at least a portion of a peripheral edge portion of the backlight unit (40) from the front surface side of the display device (100; 100a; 100b), and
the support member (30) comprises at least one of a first protective member (72) intended to contact the display panel (20) and protect a top surface of the display panel (20) and a second protective member (73) intended to contact the backlight unit (40) and protect a top surface (41) of the backlight unit (40).
